# EUROPEAN PATENT SPECIFICATION

(11) **EP 0 632 233 B1**
(45) Date of publication and mention of the grant of the patent: **05.03.1997**
(21) Application number: 94850114.3
(22) Date of filing: 23.06.1994
(51) Int. Cl.: F24F 3/14

(54) **Method and equipment for reducing the fog arising from humid exhaust air**
Verfahren und Vorrichtung zur Reduktion des von feuchter Abluft aufsteigenden Nebels
Procédé et dispositif pour la réduction du brouillard se dégageant de l'air humide d'échappement

(30) Priority: 01.07.1993 FI 933031
(43) Date of publication of application: 04.01.1995
(73) Proprietor: VALMET CORPORATION, 00620 Helsinki (FI)
(72) Inventor: Kotajärvi, Jukka, SF-21250 Masku (FI); Lalli, Esko, SF-21200 Raisio (FI)
(74) Representative: Rostovanyi, Peter

(56) References cited:
- AT-B- 394 773
- DE-A- 2 361 678
- DE-C- 413 576
- GB-A- 601 023

## Description

The invention concerns a method and an equipment for reducing the fog arising from humid exhaust air.

Mixing of an exhaust air that is in the saturated state with the outdoor air almost always produces fog. Fog arises when the status point of the air enters into an area in which all the humidity contained in the air cannot be accommodated in the air in the form of water vapour. The amount of fog that is formed can be reduced by cooling the exhaust air. Since the exhaust air still remains in the saturated state, occurrence of fog cannot be prevented. In the solution in accordance with the present invention, cooled exhaust air is mixed with heated outdoor air. This has the effect that the exhaust air is no longer in the saturated state. When the exhaust air is mixed with the outdoor air, the humidity can be accommodated in the mixture in the form of water vapour if a sufficiently large amount of heated outdoor air has been mixed with the exhaust air. In order to enhance the effect of the mixing, the exhaust air is first cooled, in which case a smaller amount of heated outdoor air has to be mixed. The exhaust air is cooled by means of a liquid/air or air/air heat transfer device, and thermal energy obtained from the exhaust air is used favourably for heating the outdoor air to be mixed.

The method in accordance with the invention for reducing the fog arising from the humidity contained in exhaust air is defined in by the features of claim 1.

DE-C-413 576 discloses mixing of outside air with exhaust air, which is not cooled before mixing.

The equipment in accordance with the invention for reducing the fog arising from the humidity contained in the exhaust air is defined by the features of claim 3, the preamble of this claim being based on DE-C-413 576.

GB-A-601 023 discloses an apparatus for extracting heat from used air, wherein the air is passed through two heat exchangers. In one of these, heat in the used air is transferred to fresh air.

In the following, the invention will be described with reference to some preferred embodiments of the invention illustrated in the figures in the accompanying drawing, the invention being, yet, not supposed to be confined to said embodiments alone.

Figure 1A illustrates the mixing of exhaust air and outdoor air in a Mollier diagram in a prior-art solution.

Figure 1B illustrates the solution in accordance with the invention.

Figure 2 illustrates a solution of equipment in accordance with the invention.

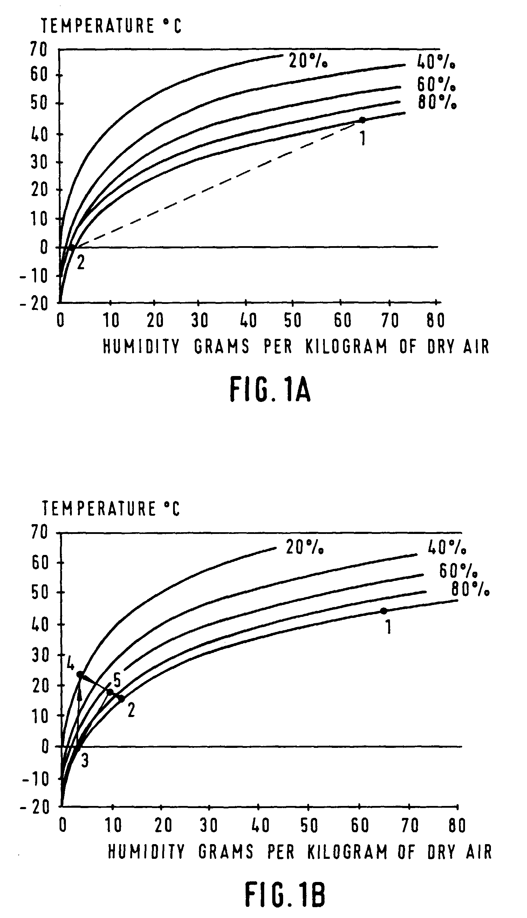

Fig. 1A illustrates a case in which outdoor air at -1°C and saturated exhaust air at 45°C are mixed together. The example of Fig. 1A corresponds to mixing of exhaust air and outdoor air in a conventional prior-art solution. Fog is produced in the part of the mixing line placed below the saturation curve, that is in respect of the whole of the mixing from the status point 1 to the status point 2.

In Fig. 1B, in accordance with the invention, the mixing of the outdoor air and the exhaust air has been carried out so that the exhaust air has first been cooled from 45°C to 15°C, i.e. by 30°C from the status point 1 to the status point 2. Hereupon, with said air, outdoor air has been mixed which has been heated from the status 3 to the status 4, i.e. to 24°C. In this case, the amount of outdoor air that is mixed is 50 % of the amount of exhaust air, and so the state of the exhaust air that is blown into the open air corresponds to the point 5. Thus, during the mixing from the status point 5 to the status point 3, one does not enter outside the saturation curve, i.e. below the curve as shown in Fig. 1B, so that fog is not produced.

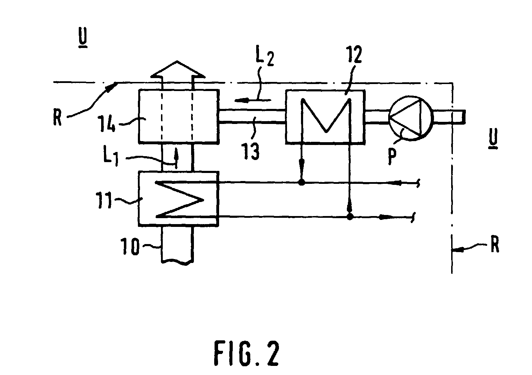

Figure 2 illustrates a solution of equipment in accordance with the invention.

In the way shown in Fig. 2, the exhaust air is passed through the duct 10 in the way shown by the arrow L₁ out of the building R, out of its interior space H or out of a process in the building. The exhaust air is passed through the duct 10 outdoors U. The duct 10 includes a heat exchanger 11. Thus, the exhaust air L₁ is cooled and heat is recovered from it by means of the heat exchanger 11. The heat exchanger 11 transfers heat to the heat exchanger 12, which may be favourably a plate radiator. By means of the heat exchanger 12, the mixing air L₂ is heated. The heat exchanger 12 is placed in the mixing-air duct 13, and mixing air L₂ is taken from the open air U and transferred by means of the blower P into the mixing unit 14, in which the mixing air L₂ and the exhaust air L₁ are mixed, being removed as partly or fully mixed into the air atmosphere in the open air U. Thus, in the solution in accordance with the invention, the exhaust air L₁ is cooled, and in the mixing unit 14 said exhaust air is mixed with outdoor air that has been heated by means of a heat exchanger, preferably a plate radiator or some other arrangement of equipment, said outdoor air being produced favourably as an amount of about 50 % of the amount of the exhaust air. During mixing, the humidity present in the exhaust air remains in the form of water vapour, and fog is not produced. The mixing air L₂ is heated by means of the thermal energy recovered from the exhaust air.

## Claims

1. Method for reducing the fog arising from humid exhaust air, **characterized** in that air (L₁) that is removed from a room or a building or from a process is cooled and that, hereupon, mixing air (L₂) taken from the open air and thereafter heated is mixed with said exhaust air, and that the partly or fully combined air flow (L₁ + L₂) is passed outdoors.

2. Method as claimed in claim 1, **characterized** in that, in the method, the mixing air (L₂) is heated by means of thermal energy recovered from the exhaust air (L₁).

3. Equipment for reducing the fog arising from humid exhaust air by a method according to claim 1, comprising a duct (10), through which the exhaust air (L₁) is passed out of the building (R), from its interior space (H), or from a process, and a mixing-air duct (13), through which mixing air (L₂) is passed into a mixer unit (14), in which the exhaust air (L₁) and the mixing air (L₂) are mixed partly or fully **characterized** in that the exhaust air duct (10) comprises a heat exchanger (11) for cooling the exhaust air (L₁) and the mixing air duct (13) comprises another heat exchanger (12) for heating the mixing air (L₂), which is taken from the open air, before mixing in the mixer unit (14), the mix being passed outdoors (U).

4. Equipment as claimed in the preceding claim, **characterized** in that there is a blower (P), by whose means the air is circulated from outdoors through the heat exchanger (12) into the mixing unit (14).

5. Equipment as claimed in claim 3 or 4, **characterized** in that the heat that has been recovered from the exhaust air in said heat exchanger (11) is transferred to the mixing air heating heat exchanger (12).

## Patentansprüche

1. Verfahren zur Reduktion des sich aus feuchter Abluft ergebenden Nebels, dadurch gekennzeichnet, daß von einem Raum oder Gebäude oder von einem Prozeß abgezogene Luft (L₁) gekühlt wird und daß daraufhin von der Freiluft aufgenommene und anschließend erwärmte Mischluft (L₂) mit der Abluft gemischt wird und daß die teilweise oder vollständig kombinierte Luftströmung (L₁ + L₂) nach außen geleitet wird.

2. Verfahren gemäß Patentanspruch 1, dadurch gekennzeichnet, daß in dem Verfahren die Mischluft (L₂) mit Hilfe von aus der Abluft (L₁) rückgewonnener Wärmeenergie erwärmt wird.

3. Vorrichtung zur Reduktion des sich aus feuchter Abluft ergebenden Nebels mit Hilfe eines Verfahrens gemäß Patentanspruch 1, mit einem Kanal (10), durch welchen die Abluft (L₁) aus dem Gebäude (R), und zwar von seinem Innenraum (H), oder von einem Prozeß abgeleitet wird, und einem Mischluftkanal (13), durch welchen Mischluft (L₂) in eine Mischeinheit (14) geleitet wird, in welcher die Abluft (L₁) und die Mischluft (L₂) teilweise oder vollständig gemischt werden, dadurch gekennzeichnet, daß der Abluftkanal (10) einen Wärmetauscher (11) für das Kühlen der Abluft (L₁) hat und der Mischluftkanal (13) vor dem Mischen in der Mischeinheit (14) einen weiteren Wärmetauscher (12) für das Erwärmen der von der Freiluft aufgenommenen Mischluft (L₂) hat, wobei die Mischung nach außen (U) geleitet wird.

4. Vorrichtung gemäß dem vorangegangenen Patentanspruch, dadurch gekennzeichnet, daß ein Gebläse (P) vorhanden ist, mit dessen Hilfe die Luft von außen durch den Wärmetauscher (12) in die Mischeinheit (14) zirkuliert wird.

5. Vorrichtung gemäß Patentanspruch 3 oder 4, dadurch gekennzeichnet, daß die in dem Wärmetauscher (11) von der Abluft rückgewonnene Wärme zu dem Mischlufterwärmungswärmetauscher (12) transferiert wird.

## Revendications

1. Procédé pour la réduction du brouillard se dégageant de l'air humide d'échappement, caractérisé en ce que l'air (L₁) qui est prélevé d'une pièce ou d'un bâtiment ou encore d'un procédé est refroidi et qu'ensuite, l'air de mélange (L₂), prélevé de l'air extérieur et qui est ensuite chauffé, est mélangé avec l'air d'échappement et en ce que le flux d'air partiellement ou totalement combiné (L₁ + L₂) est amené à l'extérieur.

2. Procédé selon la revendication 1, caractérisé en ce que dans le procédé, l'air de mélange (L₂) est chauffé au moyen de l'énergie thermique récupérée à partir de l'air d'échappement (L₁).

3. Dispositif pour la réduction du brouillard se dégageant de l'air humide d'échappement par un procédé selon la revendication 1, comprenant une conduite (10), à travers laquelle l'air d'échappement (L₁) est amené à l'extérieur du bâtiment (R), à partir de l'espace intérieur (H), ou à partir d'un procédé et une conduite d'air de mélange (13), à travers laquelle l'air de mélange (L₂) est amené dans une unité de mélange (14), dans laquelle l'air d'échappement (L₁) et l'air de mélange (L₂) sont mélangés partiellement ou entièrement, caractérisé en ce que la conduite d'air d'échappement (10) comprend un échangeur de chaleur (11) pour refroidir l'air d'échappement (L₁) et la conduite d'air de mélange (13) comprend un autre échangeur de chaleur (12) pour chauffer l'air de mélange (L₂) qui est prélevé de l'air extérieur avant le mélange dans l'unité de mélange (14), le mélange étant amené à l'extérieur (U).

4. Dispositif selon la revendication précédente, caractérisé en ce qu'il est prévu une soufflante (P) au moyen de laquelle l'air est mis en circulation à partir de l'extérieur à travers de l'échangeur de chaleur (12) pour être amené dans l'unité de mélange (14).

5. Dispositif selon la revendication 3 ou 4, caractérisé en ce que la chaleur qui a été récupérée à partir de l'air d'échappement dans l'échangeur de chaleur (11) est transférée dans l'échangeur de chaleur (12) chauffant l'air de mélange.
